# DEMANDE DE BREVET EUROPEEN

(11) **EP 2 244 023 A1**
(43) Date de publication de la demande: **27.10.2010**
(21) Numéro de dépôt: 10160037.7
(22) Date de dépôt: 15.04.2010
(51) Int. Cl.: F24F 3/153, F24F 12/00

(54) **Dispositif de traitement d'air**

(30) Priorité: 15.04.2009 FR 0952468
(71) Demandeur: Air Habitat, 22300 Lannion (FR)
(72) Inventeur: Tanguy, Eric, 22300 Lannion (FR)
(74) Mandataire: Larcher, Dominique

(57) **Abrégé**

L'invention concerne un dispositif de traitement d'air d'une construction close, ledit dispositif comprenant :
- une veine d'extraction d'air (15) de ladite construction close ;
- une veine d'insufflation d'air neuf (17) dans ladite construction close ;
- un échangeur de chaleur (19, 19') disposé entre ladite veine d'extraction (15) et ladite veine d'insufflation (17) ;
- une pompe à chaleur comprenant un évaporateur (20, 21), un condenseur (23) et un compresseur (22),

ledit évaporateur (20, 21) étant disposé en sortie dudit échangeur (19, 19') dans ladite veine d'extraction (15) et ladite veine d'insufflation (17), et ledit condenseur (23) étant disposé dans ladite veine d'insufflation (17) en aval dudit évaporateur (20,21).

## Description

### 1. Domaine de l'invention

Le domaine de l'invention est celui des techniques de ventilation mises en oeuvre pour assurer le renouvellement, le traitement, le préchauffage et le chauffage de l'air des constructions closes. Les constructions closes regroupent tout type d'enceintes fermées telles que par exemple les bâtiments à usage d'habitation (maisons, appartements...), les bâtiments tertiaires (bureaux, magasins...), les locaux industriels (ateliers, usines, unités de fabrication...), les locaux sportifs, salle de relaxation, salle de spectacles (théâtre, cinéma, concert...), salles d'exposition, musée, édifice public et privé (églises, chapelles, châteaux, forts...), salles de congrès, salles de classes, hangar avec bardage (élevage tous types d'animaux, stockage de tous types de produits et d'aliments...), étables, les enceintes spécifiques (piscine, laboratoire, atelier de peinture, salle blanche...), serres (cultures...), atrium couvert, structure tridimensionnelle couverte, bungalow, les locaux techniques, locaux pour tous types de machineries dans les d'ouvrages d'art (barrages, réservoir, château d'eau, pompe de relevage, ...)...

Plus précisément, l'invention concerne les techniques de ventilation mécanique contrôlée (VMC) associées à des fonctions de traitement, de préchauffage et de chauffage de l'air.

### 2. Art antérieur

Les constructions closes constituent des espaces confinés au sein desquels l'air intérieur est souvent pollué et humide (en excès de vapeur d'eau).

Les sources de pollution de l'air intérieur des constructions closes sont diverses. L'activité humaine, le métabolisme, la diffusion de gaz radioactif comme le radon, les émanations des matériaux entrant dans la constitution des constructions closes constituent par exemple des sources de pollution de l'air intérieur qui appauvrissent ses qualités (excès en gaz carbonique, présence de composés organiques volatils (COV)...).

La qualité de l'air intérieur doit donc être améliorée notamment pour des raisons hygiéniques.

Afin d'améliorer la qualité de l'air intérieur, il convient de procéder à son renouvellement, en remplaçant l'air intérieur vicié par de l'air neuf provenant de l'extérieur.

Jadis, les constructions présentaient des enveloppes perméables. Le renouvellement de l'air était donc essentiellement assuré par voie naturelle du fait des défauts d'étanchéité des constructions closes.

Les défauts d'étanchéité des constructions closes étaient toutefois à l'origine de déperditions thermiques qui engendraient un surcoût pour assurer leur chauffage. Afin de limiter ces déperditions thermiques, l'étanchéité des constructions closes a été progressivement renforcée.

Le renforcement de l'étanchéité, s'il permettait d'amoindrir les déperditions thermiques, présentait néanmoins l'inconvénient de ne pas permettre d'assurer un renouvellement suffisant de l'air par voie naturelle.

Afin de pallier cet inconvénient, des techniques de ventilation mécanique contrôlée ont été développées. Au rang de ces techniques figurent la ventilation mécanique simple flux et la ventilation mécanique double flux.

La ventilation mécanique simple flux s'effectue par extraction ou par insufflation d'air.

La ventilation par extraction, consiste à mettre en place des bouches d'entrée d'air dans les pièces de vie (chambres, séjour, salon, bureau...) et des bouches d'extractions, connectées à un ventilateur, dans les pièces techniques (cuisines, toilettes, salle de bain...). La mise en oeuvre du ventilateur permet de mettre la construction close en légère dépression et d'évacuer l'air intérieur vicié par les bouches d'extraction et l'introduction d'air neuf dans les pièces de vie par les bouches d'entrée d'air.

La ventilation par insufflation, qui est peu répandue et a pratiquement disparue du marché, consiste à relier les bouches d'entrée, et non plus les bouches d'extraction, au ventilateur. La mise en oeuvre du ventilateur permet alors de mettre en légère surpression la construction close en y insufflant de l'air neuf par les bouches d'entrée et en évacuant l'air vicié par les bouches d'extraction.

Ces techniques de ventilation sont particulièrement efficaces en ce qu'elles permettent d'assurer un bon renouvellement de l'air intérieur des constructions closes. Elles présentent néanmoins l'inconvénient d'occasionner de fortes déperditions thermiques.

Afin de remédier à cet inconvénient, la ventilation mécanique double flux a notamment été développée.

La ventilation double flux consiste à mettre en place des bouches d'entrée d'air dans les pièces de vie (chambres, séjour, salon, bureau...) et des bouches d'extraction dans les pièces à pollution spécifique (cuisines, toilettes, salle de bain...).

Les bouches d'entrée et d'extraction sont toutes reliées à un caisson intégrant deux ventilateurs. La mise en oeuvre des deux ventilateurs permet d'insuffler de l'air neuf dans la construction close par les bouches d'entrée et d'extraire l'air vicié de la construction close par les bouches d'extraction.

Le caisson peut également contenir un système de récupération de chaleur, tel qu'un échangeur à plaques croisées, un caloduc ou une roue hygroscopique. La mise en oeuvre de l'échangeur permet de préchauffer l'air neuf insufflé dans la construction close en lui transférant des calories prélevées à l'air vicié extrait de la construction close.

Dans le même souci de réduire les déperditions thermiques, un autre type de ventilation double flux a été développé : la ventilation double flux avec pompe à chaleur (PAC) qui existe sous deux formes.

La première forme, se distingue de la technique de ventilation double flux décrite ci-dessus du fait que l'évaporateur de la pompe à chaleur est placé dans la veine d'air d'extraction en aval de l'échangeur à plaques croisées ou d'un caloduc, et que le condenseur est placé dans la veine d'air neuf en aval de l'échangeur à plaques croisées ou du caloduc. L'air vicié extrait de la construction close circule à travers l'évaporateur de la pompe à chaleur de façon à transférer ses calories à l'air neuf qui circule à travers le condenseur avant d'être insufflé dans la construction close.

La seconde, se distingue de la technique de ventilation double flux décrite ci-dessus du fait que l'échangeur à plaques croisées ou le caloduc est remplacé par une pompe à chaleur. L'air vicié extrait de la construction close circule à travers l'évaporateur de la pompe à chaleur de façon à transférer ses calories à l'air neuf qui circule à travers le condenseur avant d'être insufflé dans la construction close.

Ces techniques de ventilation double flux présentent l'avantage de permettre de réduire les déperditions thermiques dues au renouvellement d'air des constructions closes, et ainsi de diminuer la consommation énergétique nécessaire à leur chauffage.

### 3. Objectifs de l'invention

L'invention a pour objectif de fournir, dans au moins un mode de réalisation, une technique de ventilation qui conduise à limiter la consommation énergétique nécessaire au chauffage des constructions closes.

Un autre objectif de l'invention est de fournir, dans au moins un mode de réalisation, une telle technique qui permette de réduire les besoins en chauffage d'une construction close.

Un autre objectif de l'invention est de fournir, dans au moins un mode de réalisation, une telle technique qui permette de réduire les pertes en chauffage liées au renouvellement d'air d'une construction close.

Un autre objectif de l'invention est de fournir, dans au moins un mode de réalisation, une telle technique qui permette, selon les régions climatiques, d'assurer les besoins en chauffage d'une construction close bien isolée.

L'invention a encore pour objectif de procurer, dans au moins un mode de réalisation, une telle technique qui conduise à améliorer la qualité de l'air à l'intérieur des constructions closes.

L'invention a encore pour objectif de procurer, dans au moins un mode de réalisation, une telle technique qui conduise à traiter la teneur en eau de l'air à l'intérieur des constructions closes.

Un autre objectif de l'invention est de proposer une telle technique, dans au moins un mode de réalisation, qui soit simple, facile à mettre en oeuvre et à entretenir.

L'invention vise également à produire, dans au moins un mode de réalisation, une telle technique qui soit polyvalente (ventilation, chauffage, déshumidification).

### 4. Exposé de l'invention

Ces objectifs, ainsi que d'autres qui apparaîtront par la suite, sont atteints selon l'invention à l'aide d'un dispositif de traitement d'air d'une construction close, ledit dispositif comprenant :
- une veine d'extraction d'air de ladite construction close;
- une veine d'insufflation d'air neuf dans de ladite construction close ;
- un échangeur de chaleur disposé entre ladite veine d'extraction et ladite veine d'insufflation ;
- une pompe à chaleur comprenant un condenseur, un évaporateur et un compresseur,
ledit évaporateur étant disposé en sortie dudit échangeur dans ladite veine d'extraction et ladite veine d'insufflation, et ledit condenseur étant disposé dans ladite veine d'insufflation en aval dudit évaporateur.

Cet évaporateur peut être composé d'une seule pièce ou scindée en deux pièces.

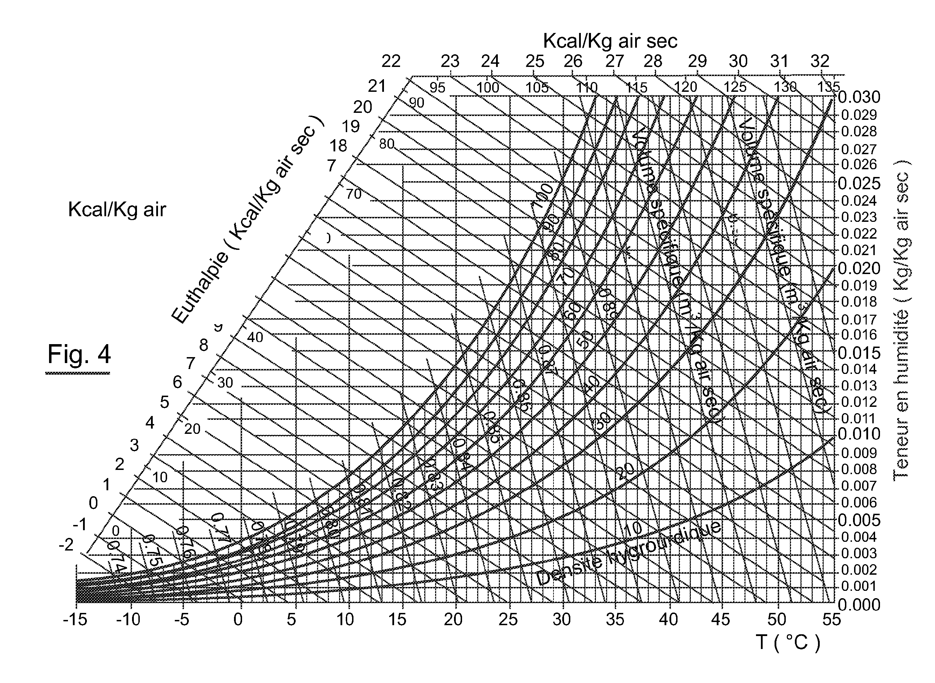

Ainsi, l'invention repose sur une technique tout à fait innovante de ventilation des constructions closes qui consiste :
- à prélever, au moyen d'un échangeur (par exemple de type à plaques croisées, caloduc, roue hygroscopique...) disposé entre une veine d'extraction d'air et une veine d'insufflation d'air, et d'un évaporateur, commun au deux veines d'air, d'une pompe à chaleur, des calories à l'air vicié extrait d'une construction close pour les transférer, au moyen du condenseur de la pompe à chaleur, à de l'air neuf destiné à y être insufflé ;
- à déshumidifier l'air neuf en condensant son humidité à la surface de l'évaporateur de la pompe à chaleur ;
- à abaisser le taux d'humidité relative par réchauffement de l'air neuf en lui transférant, au moyen du condenseur de la pompe à chaleur, les calories issues de la chaleur latente des eaux de condensation, précédemment prélevées à l'air humide des deux veines d'air (cf. figure 4). On constate en effet sur cette figure 4 que le fait d'augmenter la température de l'air permet de réduire son taux d'humidité relative.

La mise en oeuvre de l'échangeur entre les deux veines d'air permet de prélever en un premier point des calories à l'air vicié extrait de la construction close et de les transférer à l'air neuf.

La mise en oeuvre de la pompe à chaleur permet de prélever en un deuxième point des calories issues de la chaleur latente à l'air vicié pour les transférer à l'air neuf.

La technique selon l'invention permet donc d'augmenter la quantité de chaleur prélevée d'une part à l'air vicié et d'autre part à l'humidité de l'air neuf en amont du condenseur en vue de la transférer à l'air neuf destiné à être insufflé, comparativement aux techniques selon l'art antérieur qui ne prévoient de prélever des calories à l'air vicié en un seul et unique point. Ceci contribue à augmenter le rendement calorifique du dispositif (performance énergétique) et de diminuer les déperditions thermiques dues au renouvellement d'air.

La mise en oeuvre de la pompe à chaleur permet également de prélever une partie de l'humidité de l'air neuf préchauffé de façon à en réduire le taux d'humidité puis à réutiliser les calories ainsi prélevées pour réchauffer l'air neuf déshumidifié.

La sensation de fraîcheur augmente avec l'humidité relative de l'air. Ainsi, plus l'humidité relative de l'air d'une construction close est élevée, plus ses occupants ont tendance à augmenter la température à laquelle l'air est chauffé, ce qui induit des coûts de chauffage élevé. Le fait, selon l'invention, de déshumidifier l'air neuf insufflé dans une construction close permet donc à ses occupants de réduire la température de chauffage tout en bénéficiant d'un niveau de confort équivalent.

Le fait de déshumidifier l'air insufflé permet donc de réduire le besoin en chauffage des constructions closes et la consommation énergétique associée. La réutilisation des calories prélevées à l'air neuf en vue de le déshumidifier pour réchauffer l'air neuf implique qu'il n'y a pas, ou à tout le moins peu, de déperditions thermiques liées à la déshumidification de l'air neuf.

La mise en oeuvre combinée de l'échangeur entre les deux veines d'air et de la pompe à chaleur permet encore de réduire le besoin en chauffage du fait qu'elle permet d'insuffler de l'air neuf dont la température est supérieure à la température de l'air neuf où il est prélevé.

La technique selon l'invention permet donc d'assurer au moins les fonctions :
- de ventilation ;
- de déshumidification ;
- de chauffage ou à tout le moins de chauffage d'appoint ;
tout en diminuant les déperditions thermiques dues au renouvellement d'air, en diminuant les besoins en chauffage et le coût associé, et en augmentant le confort des occupants.

L'invention présente l'avantage de permettre d'assurer les fonctions de déshumidification et de chauffage au moyen d'une pompe à chaleur avec un unique compresseur et un évaporateur disposées sur les veines d'insufflation d'air neuf et d'extraction d'air.

L'invention permet également d'utiliser un compresseur de faible puissance.

Par ailleurs, le fait que l'évaporateur est disposé en sortie de l'échangeur permet d'assurer que la température de l'air est sensiblement la même en entrée de l'évaporateur (équilibrage des températures sur les deux veines d'air), comparativement aux variations climatiques. On limite ainsi les différences de température à l'entrée de l'évaporateur (commun aux deux veines d'air) ce qui contribue à garantir un fonctionnement stable de la pompe à chaleur (consommation électrique essentiellement stable, choix d'un compresseur de plus faible puissance) et à augmenter en conséquence le rendement du dispositif selon l'invention, plus précisément le COP (coefficient de performance) qui demeure constant sur une plus grande plage de fonctionnement.

Préférentiellement, ledit évaporateur comprend un premier élément d'évaporateur placé à l'intérieur de ladite veine d'extraction, et un deuxième élément d'évaporateur placé à l'intérieur de ladite veine d'insufflation.

Selon une variante, ledit évaporateur est constitué d'une seule pièce et placé à l'intérieur desdites veines d'extraction et d'insufflation, une cloison étant positionnée au centre de l'évaporateur pour assurer l'étanchéité des deux veines d'air.

Selon une caractéristique avantageuse, ledit échangeur de chaleur est un échangeur air/fluide.

Préférentiellement, ledit échangeur de chaleur est un échangeur air/liquide.

Dans ce cas, ledit échangeur est préférentiellement un échangeur à caloduc.

Cette mise en oeuvre permet d'assurer un bon transfert de chaleur d'une veine à l'autre tout en garantissant que la température de l'air dans chacune des veines en sortie de l'échangeur est sensiblement la même.

Selon une autre caractéristique avantageuse, ledit échangeur de chaleur est un échangeur air/air.

Dans ce cas, ledit échangeur est préférentiellement un échangeur à plaques.

Cette mise en oeuvre permet d'améliorer encore davantage le transfert de chaleur d'une veine à l'autre en assurant que la température de l'air dans chacune des veines en sortie de l'échangeur est sensiblement la même.

Un dispositif selon l'invention comprend avantageusement des moyens de dérivation dudit échangeur (« by pass »).

Il sera ainsi possible d'éviter les échanges thermiques entre les deux veines d'air pendant certaines périodes de l'année, comme l'été, de manière à permettre d'assurer un rafraîchissement nocturne de l'air intérieur.

Selon une caractéristique avantageuse de l'invention, ladite pompe à chaleur est réversible.

Le cycle de fonctionnement d'un dispositif selon l'invention peut ainsi être inversé de manière à ce qu'il remplisse également une fonction de rafraîchissement de l'air intérieur en particulier lorsque la température de l'air neuf extérieur est supérieure à la température de l'air vicié intérieur.

Un dispositif selon l'invention comprend préférentiellement des moyens de purification d'air placés dans ladite veine d'insufflation d'air.

Ces moyens de purification peuvent notamment comprendre :
- des filtres à particules de manière à diminuer le taux de matières en suspension dans l'air neuf insufflé dans la construction close ;
- des filtres à odeurs ;
- des moyens de désinfection de l'air neuf insufflé comme une chambre d'ionisation et/ou des moyens d'irradiation aux ultraviolets.

Selon une caractéristique avantageuse, un dispositif selon l'invention comprend des moyens de chauffage complémentaires disposés dans ladite veine d'insufflation d'air.

La mise en oeuvre de ces moyens de chauffage complémentaires, comme par exemple des résistances et/ou des batteries chaudes, peut permettre au dispositif selon l'invention d'assurer à lui seul le chauffage des constructions closes dont les besoins en chauffage sont peu élevés.

### 5. Liste des figures

D'autres caractéristiques et avantages de l'invention apparaîtront plus clairement à la lecture de la description suivante de modes de réalisation préférentiels, donnés à titre de simples exemples illustratifs et non limitatifs, et des dessins annexés, parmi lesquels :
- la figure 1a est une vue en coupe d'un dispositif de traitement d'air selon un premier mode de réalisation de l'invention ;
- la figure 1b illustre des moyens de dérivation de l'échangeur de l'installation de la figure 1a ;
- la figure 2 est une vue en coupe d'un dispositif de traitement d'air selon un deuxième mode de réalisation de l'invention ;
- la figure 3 est un graphique qui représente la zone de confort en fonction de la température et de l'humidité ;
- la figure 4 représente le diagramme de l'air humide.

### 6. Description d'un mode de réalisation de l'invention

### 6.1. Rappel du principe de l'invention

Le principe général de l'invention repose sur une technique tout à fait innovante de ventilation des constructions closes qui consiste :
- à prélever, au moyen d'un échangeur (de type à plaques croisées, caloduc, roue hygroscopique...) disposé entre une veine d'extraction d'air et une veine d'insufflation d'air, et d'un évaporateur (commun au deux veines d'air) d'une pompe à chaleur, des calories à l'air vicié extrait d'une construction close pour les transférer, au moyen du condenseur de la pompe à chaleur, à de l'air neuf destiné à y être insufflé ;
- à déshumidifier l'air neuf en condensant son humidité à la surface de l'évaporateur de la pompe à chaleur et à transférer ensuite les calories issues de la chaleur latente des eaux de condensation à l'air neuf ;
- à abaisser le taux d'humidité relative par réchauffement de l'air neuf en lui transférant, au moyen du condenseur de la pompe à chaleur, les calories précédemment prélevées à l'air humide (cf. figure 4).

Cette technique permet donc :
- d'augmenter les zones de prélèvement de calories à l'air vicié extraite d'une construction close en vue de les transférer à l'air neuf avant qu'il soit insufflé dans la construction close, ce qui permet de diminuer les déperditions thermiques dues au renouvellement d'air et de diminuer l'énergie nécessaire au chauffage de la construction close.
- de déshumidifier l'air neuf avant son insufflation, de manière à réduire le besoin en chauffage, la consommation énergétique associée et le développement des de spores microbiennes tout en assurant un niveau de confort équivalent.

L"invention permet de procurer ces avantages au moyen d'une technique polyvalente assurant notamment les fonctions :
- de ventilation ;
- de déshumidification ;
- de chauffage ou à tout le moins de chauffage d'appoint
par la mise en oeuvre combinée d'un échangeur placé entre une veine d'extraction d'air vicié et une veine d'insufflation d'air neuf, et d'une pompe à chaleur remplissant la double fonction de déshumidification et de préchauffage de l'air neuf.

### 6.2. Exemple d'un premier mode de réalisation d'un dispositif de traitement d'air selon l'invention

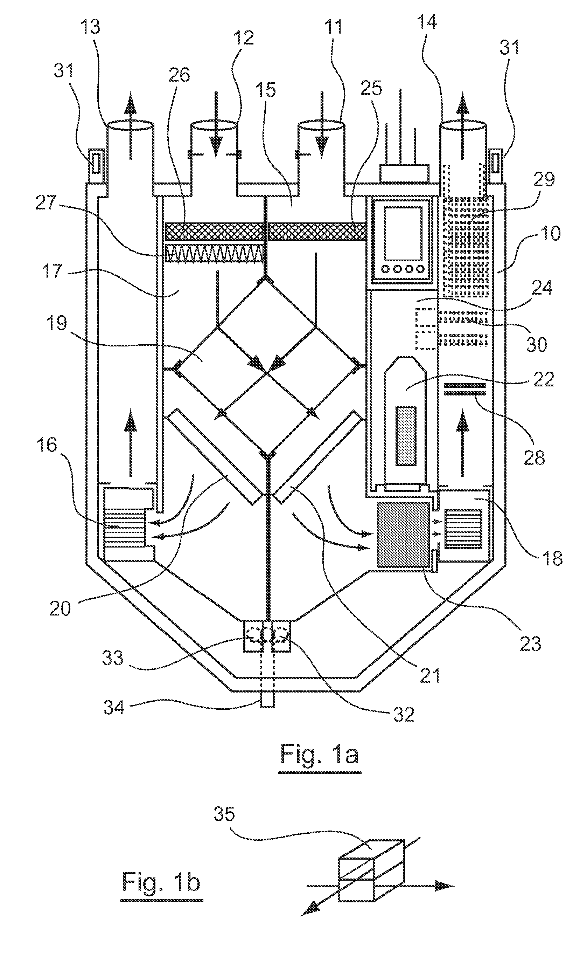

On présente, en relation avec les figures 1a et 1b, un premier mode de réalisation d'un dispositif de traitement d'air selon l'invention.

Ainsi que cela apparaît sur cette figure 1a, un tel dispositif comprend un caisson 10. Ce caisson 10 est destiné à être fixé verticalement à l'extérieur ou à l'intérieur d'une construction close devant être ventilé, suspendu sous les combles par des éléments d'accroche 31, posé au sol ou solidarisé à un mur. Le caisson 10 est refermé au moyen d'une porte amovible en façade (non représentée). Toutes ses parois sont isolées tant au niveau thermique et phonique.

Le caisson 10 présente une première entrée d'air 11, une deuxième entrée d'air 12, une première sortie d'air 13 et une deuxième sortie d'air 14.

La première entrée d'air 11 est destinée à être reliée, au moyen de gaines de ventilation à au moins une bouche d'extraction placée dans une pièce technique à pollution spécifique d'une construction close, comme une salle de bain, des toilettes, une cuisine...

La première sortie d'air 13 est destinée à être reliée au moyen de gaines de ventilation à l'extérieur de la construction close (rejet).

Les premières entrée 11 et sortie 13 définissent l'entrée et la sortie d'une veine d'extraction d'air vicié 15.

Cette veine d'extraction d'air 15 loge un ventilateur 16 dont la mise en oeuvre permet de générer une dépression à l'intérieur de la veine d'extraction d'air 15 en vue d'extraire l'air vicié de la construction close.

La deuxième entrée d'air 12 est destinée à être reliée, au moyen de gaines de ventilation à au moins une bouche d'entrée d'air neuf extérieur à la construction close.

La deuxième sortie d'air 14 est destinée à être reliée au moyen de gaines de ventilation à au moins une bouche d'insufflation d'air disposée notamment dans les pièces de vie de la construction close.

Les deuxièmes entrée 12 et sortie 14 définissent l'entrée et la sortie d'une veine d'insufflation d'air neuf 17.

Cette veine d'insufflation d'air 17 loge un ventilateur 18 dont la mise en oeuvre permet de générer une dépression à l'intérieur de la veine d'insufflation d'air 17 en vue d'insuffler de l'air neuf à l'intérieur de la construction close.

Le débit du ventilateur 18 d'insufflation est plus important que celui du ventilateur 16 d'extraction. La pression est donc plus importante dans la construction close qu'à l'extérieur. Ceci permet de lutter contre la diffusion de gaz radioactif comme le radon au sein de la construction close. Le gaz ne pourra pas s'introduire au travers de fissures et/ou défauts d'étanchéités de l'enveloppe de la construction close. Cette technique de mise en surpression contrôlée permet d'homogénéiser l'air dans la construction close. Il existe alors très peu de différences de température entre le plafond et le sol, ce qui permet de réduire les besoins énergétiques.

Les veines d'extraction d'air 15 et d'insufflation d'air 17 sont étanches en sorte que l'air circulant à l'intérieur de l'une de ces veines d'air n'entre pas en contact avec l'air circulant dans l'autre veine d'air.

Un échangeur 19 est disposé entre les veines d'extraction d'air 15 et d'insufflation d'air 17. Il présente deux couples d'entrées et de sorties chacun reliés à une veine d'air différente. Cet échangeur 19 permet de transférer des calories de l'air circulant dans une des veines 15, 17, à l'air circulant dans l'autre veine. Dans ce mode de réalisation, l'échangeur 19 est un échangeur à plaques.

Le caisson 10 loge une pompe à chaleur. Cette pompe à chaleur est de type réversible et comprend un évaporateur 20, 21, un compresseur 22, et un condenseur 23.

L'évaporateur 20, 21 est disposé dans les veines d'extraction d'air 15 et d'insufflation d'air 17. L'évaporateur est scindé en deux pièces. Il comprend ainsi un premier 20 et un deuxième 21 élément d'évaporateur. Le premier élément d'évaporateur 20 est placé dans la veine d'extraction d'air 15, à la sortie de l'échangeur 19, de manière inclinée essentiellement parallèlement à celui-ci afin d'améliorer l'écoulement des condensats, et d'homogénéiser les flux d'air qui traversent l'échangeur 19 par l'intermédiaire des ailettes de l'évaporateur qui servent de guide (le même principe sera appliqué dans la veine d'insufflation). Le deuxième élément d'échangeur 21 est placé dans la veine d'insufflation d'air 17, à la sortie de l'échangeur 19 également de manière inclinée essentiellement parallèlement à celui-ci.

Dans une variante de ce mode de réalisation, les premier 20 et deuxième 21 éléments d'échangeur pourront être placés en entrée de l'échangeur 19. Cette configuration présente toutefois l'inconvénient d'assurer une moins bonne stabilité de fonctionnement de la pompe à chaleur dans la mesure où la température de l'air traversant respectivement chacun de ces éléments d'échangeur est alors différente.

Le condenseur 23 est placé dans la veine d'insufflation d'air 17, en amont de l'échangeur 19 et de l'élément d'évaporateur 21. En d'autres termes, il est placé en sortie de la veine d'insufflation d'air 17.

Le compresseur 22 est placé à l'intérieur du caisson 10, dans un compartiment 24 isolé des veines d'insufflation d'air 17 et d'extraction d'air 15.

La veine d'extraction d'air 15 loge un filtre à particules 25 (en fonction des classes ISO d'empoussièrement) placé en aval de l'échangeur 19. Ce filtre 25 est un filtre grossier dont la mise en oeuvre permet d'éviter l'encrassement de l'échangeur 19, de l'élément d'évaporateur 20 et du ventilateur 16.

La veine d'insufflation d'air 17 loge un premier filtre à particules 26 et un deuxième filtre à particule 27 (en fonction des classes ISO d'empoussièrement) placés l'un à la suite de l'autre en amont de l'échangeur 19. Le premier filtre 26 est un filtre grossier. Le deuxième filtre 27 est un filtre plus fin. Leur mise en oeuvre permet d'éviter l'encrassement de l'échangeur 19, de l'élément d'évaporateur 21 et du ventilateur 18.

La veine d'insufflation d'air 17 loge également des moyens de désinfection de l'air neuf insufflé. Ces moyens comprennent des lampes UV 28. Dans une variante, ils pourront comprendre une chambre d'ionisation ou tout autre moyen d'assainissement adapté.

La veine d'insufflation d'air 17 loge des moyens de chauffage complémentaire disposés à sa sortie. Ces moyens de chauffage comprennent une batterie chaude 29 et des résistances électriques 30 dont la mise en oeuvre peut permettre de participer au réchauffage de l'air neuf insufflé en période de grand froid ou à assurer le chauffage de la construction close.

Les veines d'extraction d'air 15 et d'insufflation d'air 17 présentent chacune un siphon 33, 32 dans leur partie inférieure en forme d'entonnoir. Ces siphons 32, 33 sont reliés à un élément de canalisation 34 débouchant en dehors du caisson 10 de manière à assurer l'évacuation des condensats. Ce montage permet d'assurer l'étanchéité et l'indépendance des veines d'air.

Dans une variante, la première entrée d'air 11 pourra également être reliée à des bouches d'extraction placées dans des pièces à effet de serre (vérandas, combles...) de manière à permettre un réchauffement de l'air neuf en prélevant de la chaleur à l'air de ces pièces, lorsque la température qui y règne est supérieure à la température des autres pièces techniques. Pour cela, le dispositif comprend des sondes de température placées dans les pièces techniques, les pièces à effet de serre, les combles. Des moyens de comparaison de ces températures et des moyens d'ouverture seront placés à l'entrée 11 de façon à aspirer l'air chaud des zone à effet de serre tout en assurant un débit d'extraction minimal dans les pièces à pollution spécifique.

Ces moyens d'ouverture sont composés d'un double registre. Un premier registre, 100% occultant, est positionné sur la gaine de prélèvement de chaleur sur la zone à effet de serres. Un second registre, perforé, est positionné sur la gaine d'extraction de l'air vicié. Ce double registre se déclenche lorsqu'une température de consigne de l'air des zones chaudes est atteinte. Le premier registre s'ouvre alors que le second se ferme. Pour cela, dès que la consigne est atteinte, un signal est transmis à un axe principal motorisé qui s'anime d'un mouvement de rotation, à la fin duquel la gaine qui est en liaison avec la zone d'effet de serre est complètement ouverte tandis que la gaine d'extraction est partiellement occultée par le registre perforé permettant ainsi d'assurer un débit conforme au norme d'extraction en mode minimal. Le mode normal est le mode de fonctionnement par défaut par opposition au mode de fonctionnement forcé (sur ventilation).

Le fait de prélever l'air chaud « gratuit » d'une zone à effet de serre (véranda, serre combles, faux combles) par le biais du circuit d'extraction permet de récupérer et de transférer les calories vers le circuit d'insufflation via (l'échangeur et la pompe à chaleur sans risque de dispersion de contaminants chimiques dans l'air neuf (par exemple les émanations de produits fongicides qui sont utilisés dans le traitement des bois de charpente).

L'échangeur 19 est amovible. Il peut être remplacé par des moyens de dérivation 35. Ces moyens de dérivation 35 comprennent, comme cela apparaît sur la figure 1b, deux tunnels indépendants qui, une fois mis en place dans le caisson 10, ne permettent plus d'assurer d'échange thermique entre les flux d'air circulant respectivement dans l'une et l'autre des veines d'air 15 et 17. Cette mise en oeuvre peut permettre de réaliser un rafraîchissement nocturne de la construction close en été alors que la température extérieure est inférieure à la température intérieure.

### 6.3. Exemple d'un deuxième mode de réalisation d'un dispositif de traitement d'air selon l'invention

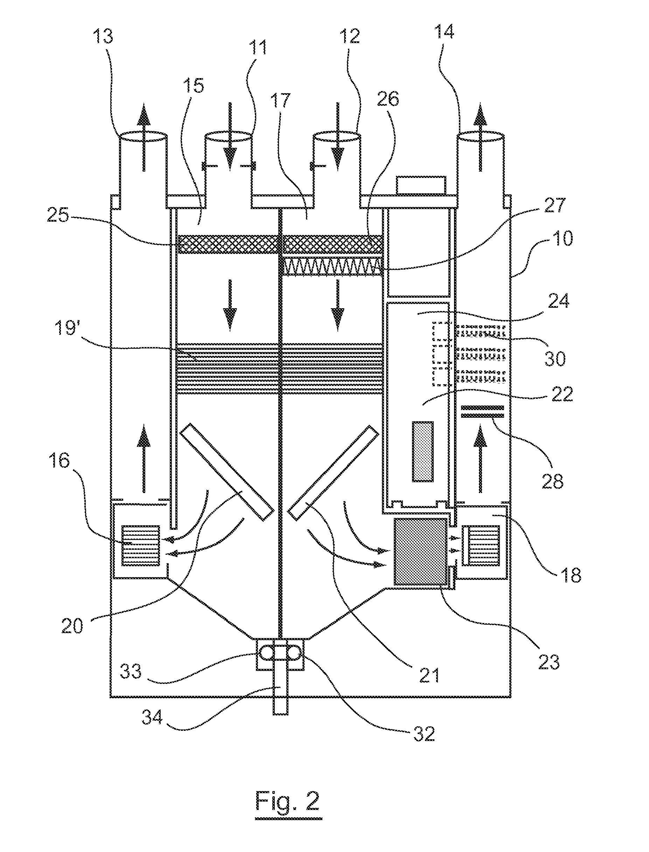

On présente, en relation avec la figure 2, un deuxième mode de réalisation d'un dispositif de traitement d'air selon l'invention.

Ainsi que cela est représenté sur cette figure 2, ce deuxième mode de réalisation se distingue du premier mode de réalisation exclusivement en ce que l'échangeur 19' est un échangeur air-fluide à caloduc et non plus un échangeur airair à plaques.

Les échangeurs à plaques atteignent un rendement compris entre 50% et 90 % mais, lorsque la température de l'air neuf est négative, un système de dégivrage est à prévoir (généralement des résistances électriques, ce qui réduit le bilan énergétique du système). Ils sont sensibles à l'encrassement et au givrage. Les échangeurs à 90% sont très onéreux.

Le caloduc est plus robuste (résistance à l'encrassement). Son rendement dépasse rarement les 55%. Il contient un fluide frigorigène ou à base d'alcool permettant un fonctionnement en température négative et évite le givre.

Dans ce mode de réalisation, la veine d'extraction d'air comprend deux sous veines : une sous veine en relation avec le caloduc et une sous veine libre sans relation avec le caloduc. Le by-pass (35') est composé d'un volet se déplaçant en translation. Le rôle du volet est d'occulter la sous veine d'air qui arrose la partie du caloduc se situant dans la veine d'extraction. Tout en se déplaçant, le volet ouvre la sous veine libre. L'air ne circulant plus sur une partie du caloduc, le système d'échange s'arrête. Ce système est motorisé et déclenché journellement pendant l'été, car durant la journée, lorsque la température est plus importante à l'extérieur qu'à l'intérieur de la construction close, le caloduc permet de rafraîchir l'air entrant de part le comportement du fluide qu'il contient. Le soir, c'est l'inverse. Il fait plus frais à l'extérieur qu'à l'intérieur. Le caloduc doit être occulté sans quoi il réchauffe l'air entrant alors que l'on cherche à le rafraîchir.

### 6.4. Régulation

Un dispositif selon l'invention comprend des moyens de régulation.

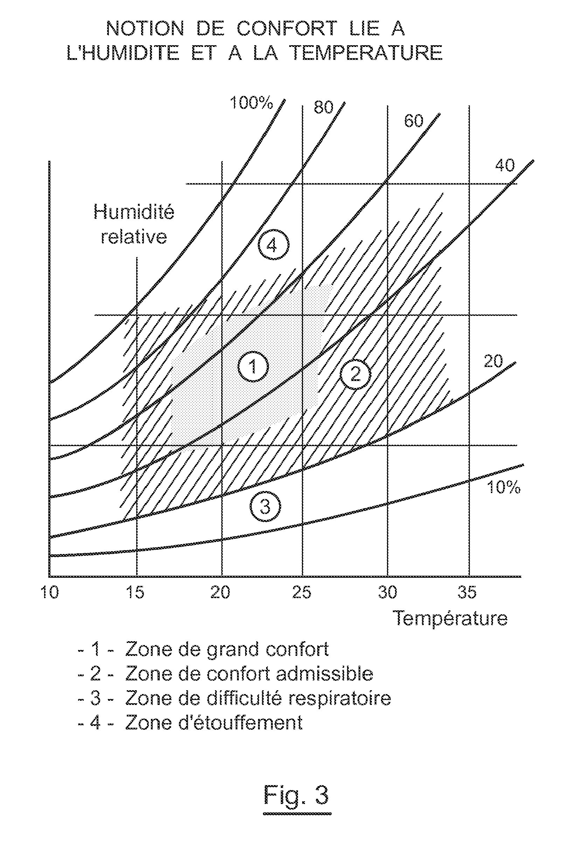

Ces moyens de régulation ont pour rôle d'éliminer l'excès d'humidité (humidité relative supérieure à 50%) dans l'air neuf entrant. Cette fonction de déshumidification apporte les avantages suivants :
- déplacement de la zone de confort (cf. figure 3) en abaissant l'hygrométrie dans l'air. Cela permet de garder les mêmes sensations de confort pour une température inférieure d'environ de 2 à 3°C ;
- de réduire le temps de chauffe pour atteindre la zone de confort ;
- de réduire ou d'éliminer tous les problèmes liés à un excès d'humidité (humidité relative supérieure à 60%) tels que : condensation (amélioration des qualités d'isolation thermique de l'enveloppe de la construction close), moisissures avec apparition et développement de colonies et de spores microbiennes avec risque de contamination fongicide des occupants (puissant agent inflammatoire), problème de santé notamment de rhumatisme, asthme, maladie des bronches, rhinite...

Ces moyens de régulation permettent de renouveler le volume de l'air d'une façon optimale en fonction de la qualité de l'air intérieur afin de répondre aux nouvelles exigences normatives en matière de pollution de l'air intérieur. Pour cela, ils comprennent notamment une sonde CO₂ (détection de concentration de gaz carbonique), une sonde d'humidité (détection de l'hygrométrie), une sonde COV (composés organiques volatils) et des sondes de température. Le niveau de ventilation est donc adapté aux besoins des occupants. Ceci conduit à réduire les pertes énergétiques dues au renouvellement de l'air.

## Revendications

1. Dispositif de traitement d'air d'une construction close, ledit dispositif comprenant :
- une veine d'extraction d'air (15) de ladite construction close ;
- une veine d'insufflation d'air neuf (17) dans ladite construction close ;
- un échangeur de chaleur (19, 19') disposé entre ladite veine d'extraction (15) et ladite veine d'insufflation (17) ;
- une pompe à chaleur comprenant un évaporateur (20, 21), un condenseur (23) et un compresseur (22),
ledit évaporateur (20, 21) étant disposé en sortie dudit échangeur (19, 19') dans ladite veine d'extraction (15) et ladite veine d'insufflation (17), et ledit condenseur (23) étant disposé dans ladite veine d'insufflation (17) en aval dudit évaporateur (20,21).

2. Dispositif selon la revendication 1, **caractérisé en ce que** ledit évaporateur comprend un premier élément d'évaporateur (20) placé à l'intérieur de ladite veine d'extraction (15), et un deuxième élément d'évaporateur (21) placé à l'intérieur de ladite veine d'insufflation (17).

3. Dispositif selon l'une quelconque des revendications 1 ou 2, **caractérisé en ce que** ledit échangeur de chaleur (19') est un échangeur air/fluide.

4. Dispositif selon la revendication 3, **caractérisé en ce que** ledit échangeur de chaleur (19') est un échangeur air/liquide.

5. Dispositif selon la revendication 4, **caractérisé en ce que** ledit échangeur est un échangeur à caloduc (19').

6. Dispositif selon l'une quelconque des revendications 1 à 3, **caractérisé en ce que** ledit échangeur de chaleur (19) est un échangeur air/air.

7. Dispositif selon la revendication 6, **caractérisé en ce que** ledit échangeur est un échangeur à plaques (19).

8. Dispositif selon l'une quelconque des revendications 1 à 7, **caractérisé en ce qu'**il comprend des moyens de dérivation (35, 35') dudit échangeur (19, 19').

9. Dispositif selon l'une quelconque des revendications 1 à 8, **caractérisé en ce que** ladite pompe à chaleur est réversible.
